# FASCICULE DE BREVET EUROPEEN

(11) **EP 2 392 975 B1**
(45) Date de publication et mention de la délivrance du brevet: **15.05.2019**
(21) Numéro de dépôt: 11000462.9
(22) Date de dépôt: 21.01.2011
(51) Int. Cl.: G04B 11/00, F16D 41/18

(54) **Organe mobile à embrayage unidirectionnel**
Drehorgan mit unidirektionaler Kupplung
Wheel-organ with one-way clutch

(30) Priorité: 03.06.2010 CH 8872010
(43) Date de publication de la demande: 07.12.2011
(73) Titulaire: Patek Philippe SA Genève, 1204 Genève (CH)
(72) Inventeur: Giacobino, Julien, 1196 Gland (CH)
(74) Mandataire: Micheli & Cie SA

(56) Documents cités:
- CH-A- 541 741
- JP-U- S6 266 696
- US-A- 2 563 112
- US-A- 2 739 682
- US-A- 3 200 918
- US-A- 3 589 486
- US-A- 5 452 906

## Description

La présente invention se rapporte aux systèmes d'embrayage unidirectionnels conçus plus particulièrement pour une application horlogère tel qu'un mécanisme de remontage manuel et automatique d'une pièce d'horlogerie.

Il existe différents types de mobile d'embrayage unidirectionnel tels ceux utilisés dans un rouage de remontage automatique d'une montre qui sont des mobiles d'embrayage à cliquets, à galets ou à ressort débrayeur verticaux. De tels mobiles d'embrayage unidirectionnels sont décrit par exemple dans la publication "Théorie d'horlogerie" page 180, Edition de la Fédération des Ecoles Techniques (FET), Suisse 1998.

L'inconvénient majeur de tels mobiles d'embrayage est leur encombrement en hauteur qui est d'au moins 0,7 mm, plus généralement supérieur à 1 mm.

De plus ces mobiles de débrayage permettent de transmettre des couples de l'ordre de 200 gr. mm ce qui est insuffisant pour de nombreuses applications.

On connaît encore du document EP 1 586 960 une couronne pour pièce d'horlogerie avec dispositif de débrayage qui a pour but de débrayer la couronne de remontoir de la tige de remontoir dès que le couple transmis dépasse une valeur préétablie afin de ne pas endommager le barillet. Un tel dispositif n'est pas un embrayage unidirectionnel mais en fait un limiteur de couple.

Aussi US 3 589 486, US 2 563 112, US 2 739 682, US 5 452 906, US 3 200 918, JP S62 66696 U et CH 541 741 divulguent des systèmes d'embrayage unidirectionnels.

Le but de la présente invention est la réalisation d'un mobile d'embrayage unidirectionnel qui présente un rapport couple transmis/couple de débrayage élevé, dont l'encombrement en hauteur soit inférieur à 0,5 mm et pouvant transmettre un couple utile de 500 à 2000 gr. mm.

La présente invention a pour objet un mobile d'embrayage unidirectionnel notamment pour une application horlogère et plus particulièrement destiné à faire partie de la chaîne d'engrenages du mécanisme de remontage automatique et/ou manuel d'une pièce d'horlogerie ou d'un mouvement d'horlogerie qui obvie aux inconvénients précités.

Ce mobile d'embrayage unidirectionnel se distingue par un pignon et une roue coaxiaux et pivotant l'un par rapport à l'autre, le mobile d'embrayage unidirectionnel comportant une première pièce d'entraînement solidaire angulairement du pignon comportant au moins un cliquet élastique présentant la forme générale vu en plan d'un C dont une branche est allongée et se termine par une extrémité libre; et une seconde pièce d'entraînement solidaire angulairement de la roue et coplanaire avec la première pièce d'entraînement comportant une denture interne en dent de loup; caractérisé par le fait qu'en position neutre de repos les première et seconde pièces d'entraînement ne se touchent pas, l'extrémité des cliquets élastiques en position de repos non déformés élastiquement étant situés sur une circonférence dont le diamètre est plus grand qu'une circonférence passant par le sommet des dents de loup et plus petit qu'une circonférence passant pas le fond des dents de la denture de la seconde pièce d'entraînement.

La présente invention a également pour objet un mécanisme de remontage d'une pièce d'horlogerie comportant un tel mobile d'embrayage unidirectionnel ainsi qu'une pièce d'horlogerie comprenant un ou plusieurs de ces mobiles d'embrayage unidirectionnels.

Le dessin annexé illustre schématiquement et à titre d'exemple une forme d'exécution du mobile d'embrayage unidirectionnel ainsi qu'un mécanisme de remontage d'une pièce d'horlogerie muni de tels mobiles d'embrayage unidirectionnels.
La figure 1 est une vue en perspective de dessous du mobile d'embrayage unidirectionnel.
La figure 2 est une vue en perspective de dessus.
La figure 3 est une vue en coupe diamétrale du mobile d'embrayage unidirectionnel.
Les figures 4, 5 et 6 sont des vues en plan de dessus du mobile d'embrayage unidirectionnel dans trois positions différentes.
La figure 7 est une vue en coupe d'une seconde forme d'exécution du mobile d'embrayage et son montage sur un pont à l'aide d'une vis.
La figure 8 illustre en plan la seconde forme d'exécution du mobile d'embrayage seul.
La figure 9 est une vue en coupe suivant la ligne A-A de la figure 7, le pont et la vis de fixation du mobile d'embrayage étant enlevés.
La figure 10 illustre schématiquement en perspective le mécanisme de remontage manuel et automatique d'un mouvement d'horlogerie comprenant deux mobiles d'embrayage unidirectionnels selon l'invention.

Le mobile d'embrayage unidirectionnel selon l'invention est principalement destiné à équiper un mouvement de montre, notamment son mécanisme de remontage, et non pas l'habillement d'une pièce horlogère. En fait, ce mobile d'embrayage unidirectionnel doit permettre un encombrement en hauteur très faible, inférieure à 0,5 mm, typiquement d'une épaisseur de 0,3 mm. Il doit de plus être capable de transmettre, dans un sens de rotation, un couple important pouvant aller jusqu'à 1000 gr. mm voir plus sans subir de dommage. Il doit enfin présenter un couple résistant dans le sens de rotation inverse aussi faible que possible typiquement de l'ordre de 3 à 10 gr. mm. Un tel mobile d'embrayage doit donc présenter un rapport entre son couple maximum de transmission et son couple résistant minimum très élevé de l'ordre de 1/200 à 1/400.

Un autre but de la présente invention est de réaliser un mobile d'embrayage unidirectionnel permettant de réduire l'usure de ses pièces constitutives.

Par contre le présent mobile d'embrayage unidirectionnel ne cherche pas à diminuer un angle mort, notamment dans un mécanisme de remontage automatique. Il n'a pas non plus comme fonction de limiter un couple de transmission, on cherche à avoir dans un sens un couple transmis maximal et dans l'autre sens de rotation un couple résistant minimal.

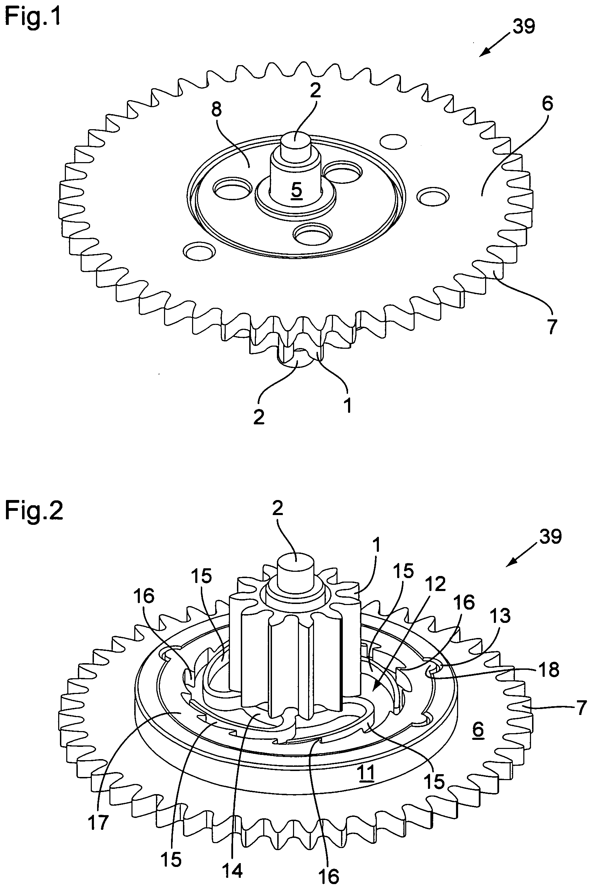

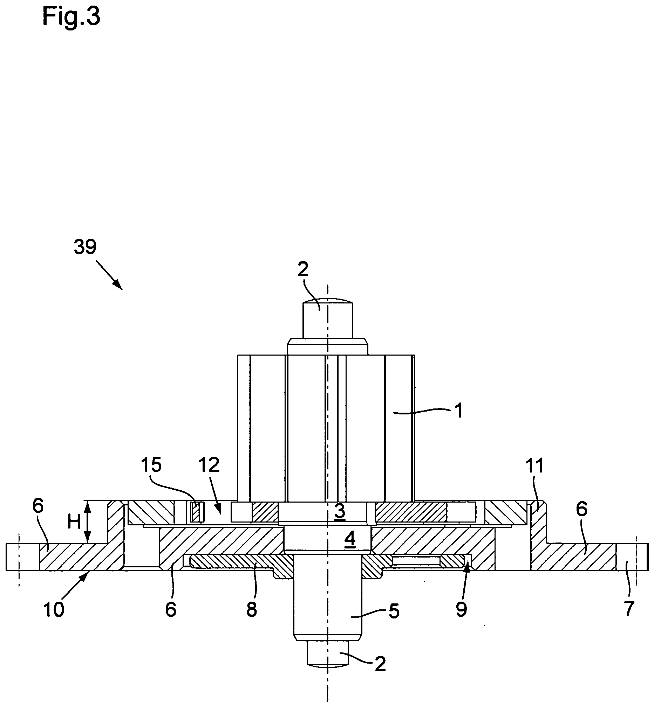

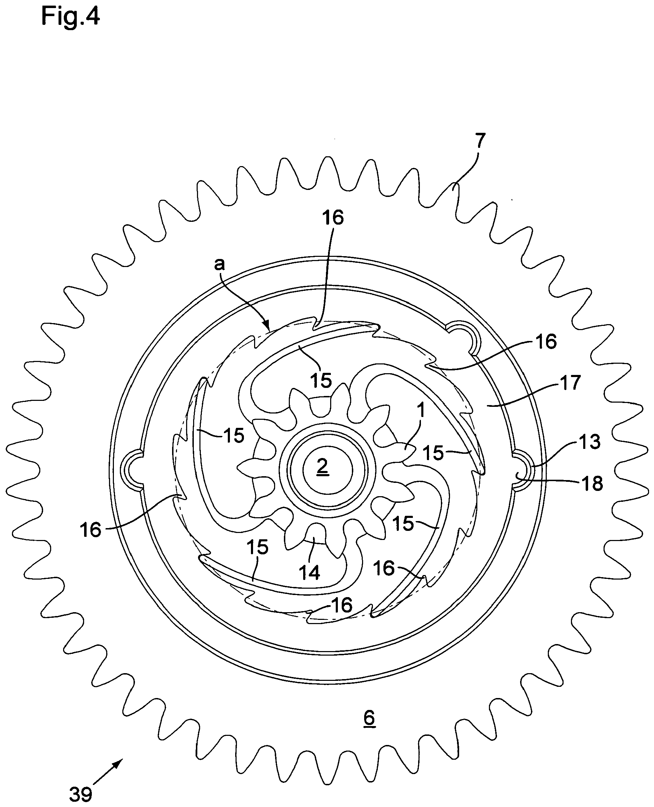

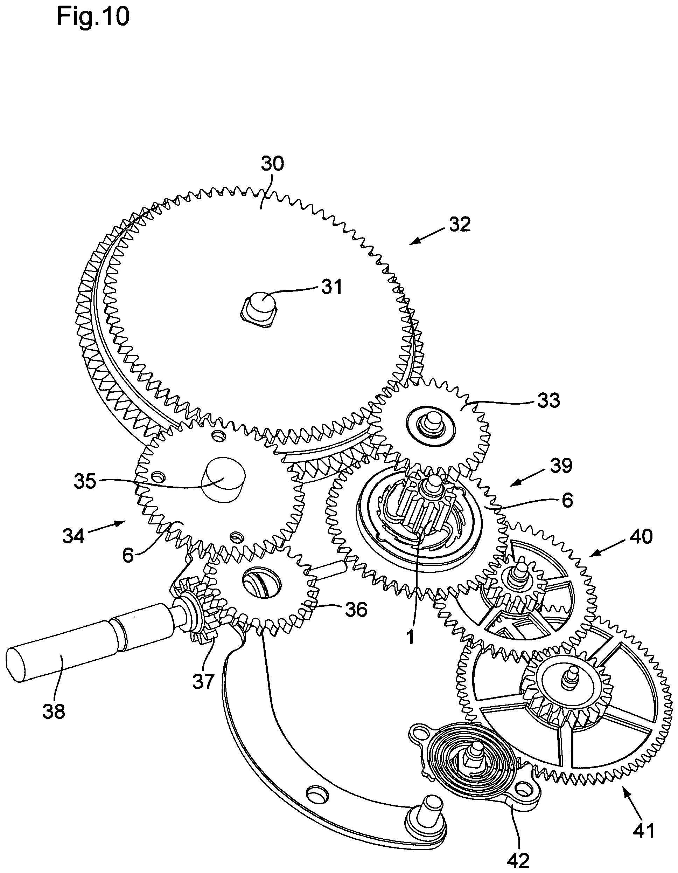

Ceci étant préalablement posé une première forme d'exécution du mobile de débrayage unidirectionnel selon l'invention va être décrit dans ce qui suit en référence aux figures 1 à 6 du dessin annexé, la figure 10 illustrant une utilisation particulière de ce mobile dans le mécanisme de remontage d'un mouvement d'horlogerie.

Le mobile de débrayage unidirectionnel illustré comporte un pignon 1 solidaire d'un axe 2. Généralement ce pignon 1 est venu d'une pièce de fabrication avec cet axe 2. Cet axe 2 comporte, jouxtant une face terminale du pignon 1, une première portée 3 suivie d'une seconde portée 4 de plus grand diamètre, elle-même suivie d'une troisième portée 5 de diamètre supérieur à celui de la seconde portée médiane 4.

Ce mobile d'embrayage unidirectionnel comporte encore une roue 6 dont la périphérie présente une denture 7. Cette roue 6 est pivotée folle sur la seconde portée 4 de l'axe 2 et sa position axiale par rapport à cet axe 2 est assurée d'une part par la face frontale libre de la première portée 3 de l'axe 2 et d'autre part par une rondelle 8 chassée sur la troisième portée 5 de l'axe 2. Cette rondelle 8 est logée au moins partiellement dans une creusure circulaire 9 que présente la face frontale libre 10 de la roue 6 pour réduire l'encombrement en hauteur du mobile.

La roue 6 comporte un moyeu 11 dont la face opposée à la creusure 9 est munie d'un évidement 12. Cet évidement 12 est de forme générale cylindrique et comporte des logements 13 pratiqués dans sa face latérale.

Le mobile comporte donc un pignon 1 solidaire de son axe 2 et une roue 6 pivotée librement sur une portée médiane 4 de cet axe et maintenue axialement sur cet axe par une rondelle 8 chassée sur une troisième portée 5 dudit axe 2.

La fonction de débrayage unidirectionnel du mobile est réalisée par une première pièce d'entraînement 14 solidaire angulairement de l'axe 2 et comportant des cliquets élastiques 15 coopérant avec une denture asymétrique en dents de loup 16 portée par la tranche interne d'une seconde pièce d'entraînement annulaire 17 solidaire angulairement avec la roue 6.

La première pièce d'entraînement 14 présente une ouverture centrale traversée par la première portée 3 de l'axe 2. Cette première portée 3 peut présenter une forme non circulaire, correspondant à la forme de l'ouverture centrale de la première pièce d'entraînement 14, de manière à ce que cette première pièce d'entraînement soit angulairement solidaire de l'axe 2.

Dans des variantes cette première pièce d'entraînement 14 pourrait être chassée, soudée ou collée sur la première portée 3 de l'axe 2.

Cette première pièce d'entraînement comporte dans l'exemple illustré cinq cliquets élastiques 15 reliés par leur base épaisse à la partie centrale de la première pièce d'entraînement 14 et s'étendant vers l'extérieur tout en s'amincissant pour former des cliquets 15 élastiquement déformable radialement.

La seconde pièce d'entraînement 17 est annulaire et comporte sur sa paroi interne une denture asymétrique 16 en forme de dent de loup. La tranche extérieure de cette seconde pièce d'entraînement annulaire comporte des bossages 18.

Cette seconde pièce d'entraînement annulaire 17 est disposée dans l'évidement 12 du moyeu 11 de la roue 6, les bossages 18 viennent se loger dans les logements 13 de ce moyeu 11 pour solidariser angulairement la roue 6 de cette seconde pièce d'entraînement 17.

Ainsi les deux pièces d'entraînements 14 et 17 sont disposées dans l'évidement 12 du moyeu 11 de la roue 6 et sont coplanaires.

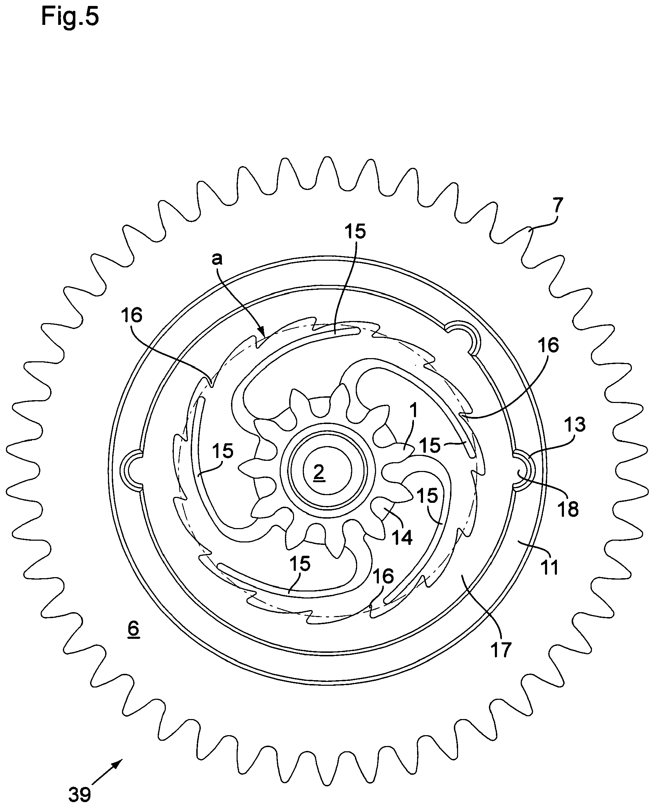

A l'état de repos du mobile d'embrayage unidirectionnel illustré à la figure 5, les extrémités des cliquets élastiques 15 sont disposées sur une circonférence d'un diamètre a, les cliquets étant au repos non déformés élastiquement et hors de tout contact avec la seconde pièce d'entraînement 17. Comme on le voit sur cette figure 5 le sommet des dents 16 de la seconde pièce d'entraînement 17 sont situés sur un diamètre plus petit que le diamètre de la circonférence a et les creux de cette denture 16 sont situés sur une circonférence d'un plus grand diamètre que la circonférence a formant l'enveloppe de la première pièce d'entraînement 14 lorsqu'elle est à l'état de repos non déformée élastiquement. Ainsi dans cet état de repos les pièces d'entraînement 14 et 17 ne se touchent pas et la roue 6 est libre de se déplacer angulairement par rapport au pignon 1 sans effort. Ceci est une caractéristique importante du mobile d'embrayage unidirectionnel car elle permet un montage facile et aisé des pièces d'entraînement 14, 17 l'une dans l'autre et permet de réduire le couple résistant lorsque la roue 6 est entraînée dans le sens horaire dans l'exemple illustré, les cliquets 15 ne touchant les dents 16 que sur une étendue angulaire de 60° à 180° soit pendant environ 1/2 à 1/6 d'un tour complet de la roue 6 par rapport au pignon 1.

Typiquement dans l'exemple illustré où la première pièce d'entraînement 14 comporte cinq cliquets élastiques 15 et ou la seconde pièce d'entraînement 17 comporte quinze dents 16, les cliquets 15 élastiques ne frottent contre les dents 16 que sur un angle de 8,5° par pas de 24° de rotation de la roue 6 dans le sens horaire par rapport au pignon 1. Le frottement et l'usure de ces pièces d'entraînement sont donc réduits d'autant.

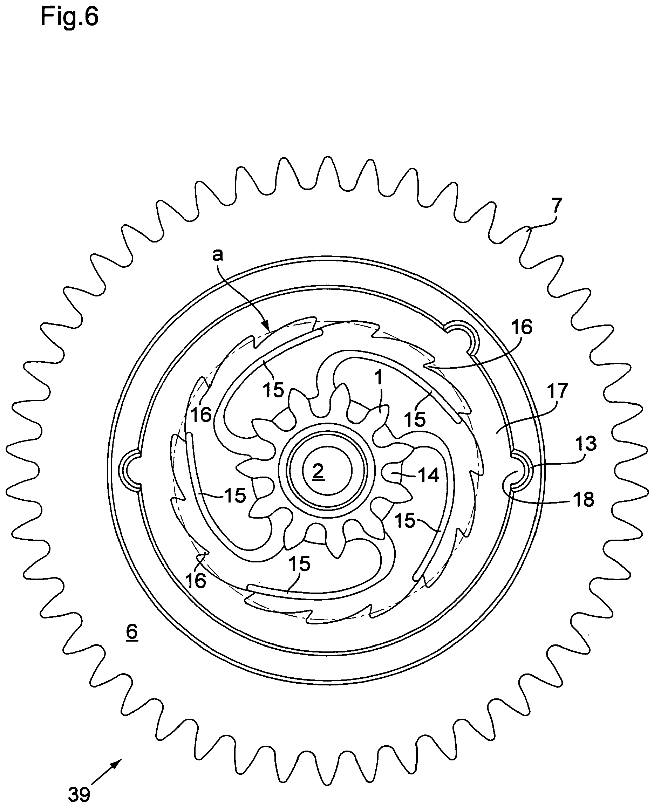

La figure 6 montre une position relative de la roue 6 par rapport au pignon 1 pour laquelle l'extrémité des cliquets élastiques 15 est en contact avec le sommet d'une dent 16. Comme on le voit les cliquets élastiques 15 sont déformés élastiquement, leurs extrémités venant se positionner sur une circonférence de diamètre inférieur à la circonférence a pour pouvoir, lors d'une rotation supplémentaire de la roue 6 par rapport au pignon 1 dans le sens horaire échapper aux dents 16.

Comme on le voit au dessin, le déplacement radial vers l'intérieur des cliquets est faible et n'entraîne que peu d'effort de manière à réduire au maximum le couple résistant et l'usure des pièces d'entraînement lorsque la roue 6 tourne en sens horaire par rapport au pignon 1 correspondant au débrayage du mobile d'embrayage.

Par contre une rotation dans le sens anti-horaire de la roue 6 par rapport au pignon 1 à partir de l'état de repos illustré à la figure 5 provoque l'entrée en contact de l'extrémité des cliquets élastiques 15 contre la face rectiligne courte des dents 16, les cliquets élastiques se déformant élastiquement vers l'extérieur et butent contre le fond de la denture 16 provoquant l'entraînement du pignon 1 par la roue 6. Le mobile d'embrayage est embrayé. Le couple transmis de la roue 6 au pignon 1 peut être très élevé car les cliquets élastiques 15 travaillent alors en compression dans leur partie effilée. Typiquement le couple nominal d'entraînement pour le mobile d'embrayage illustré à cinq cliquets élastiques 15 et quinze dents 16 peut être de l'ordre de 1000 gr. mm.

Les essais ont montré que pour un mobile d'embrayage à cinq cliquets élastiques 15 et quinze dents 16 le couple résistant, lors de la rotation dans le sens du débrayage, entre la roue 6 et le pignon 1 est de l'ordre de 5 gr. mm. tandis que le couple maximum ou de rupture des cliquets élastiques 15 lors de la rotation dans le sens de l'embrayage entre la roue 6 et le pignon 1 est de l'ordre de 1800 gr. mm. On a donc un rapport de couple maximum sur un couple résistant de l'ordre de 1/360. Suivant les formes d'exécution du mobile d'embrayage et notamment du nombre de cliquets élastiques 15 et de dents 16, ce rapport du couple maximum au couple résistant peut varier entre 1/200 et 1/500.

Par exemple dans une exécution de mobile d'embrayage comportant quatre cliquets élastiques 15 et huit dents 16, le rapport couple maximum sur couple résistant est de 1/200.

Dans la forme d'exécution illustrée comportant cinq cliquets élastiques 15 et quinze dents 16 le diamètre extérieur du moyeu 11 de la roue 6 est de 3,2 mm et la hauteur H de ce moyeu de 0,32 mm, l'encombrement dû au système d'embrayage unidirectionnel est donc réellement très réduit malgré la valeur élevée du couple pouvant être transmis, puisqu'il nécessite une épaisseur de l'ordre de 0,15 à 0,25 mm seulement pour loger les deux pièces d'entraînement 14, 17.

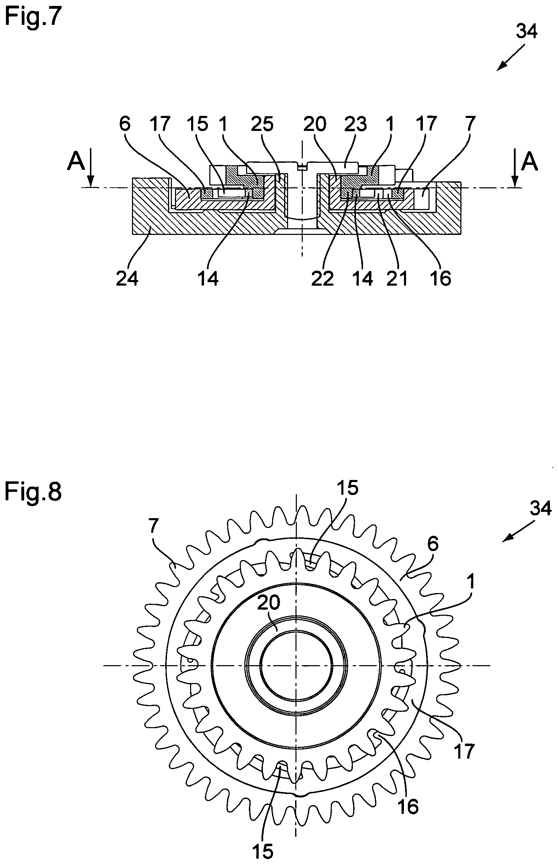

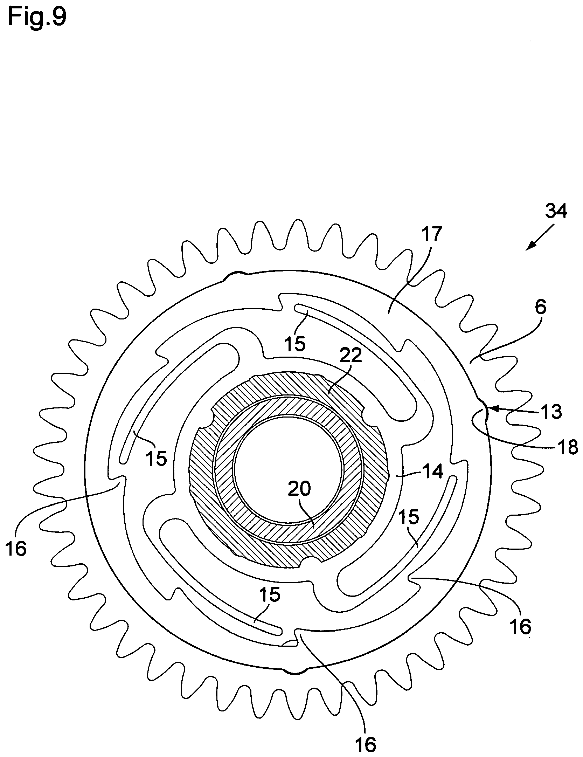

Une seconde forme d'exécution du mobile d'embrayage unidirectionnel va être décrit dans ce qui suit en référence aux figures 7 à 9 du dessin.

Dans cette seconde forme d'exécution la roue dentée 6 est solidaire d'un moyeu tubulaire 20, ou est venue d'une pièce de fabrication avec ce moyeu tubulaire.

La planche de cette roue 6 comporte un évidement annulaire 21 destiné à recevoir les pièces d'entraînement 14, 17.

Le pignon 1 comporte une jupe annulaire 22 et est pivoté librement sur le moyeu 20 de la roue 6.

Dans l'évidement 21 de la roue 6 sont disposées, comme dans l'évidement 12 de la première forme d'exécution, la première pièce d'entraînement 14 qui est solidaire angulairement du pignon 1 et la seconde pièce d'entraînement 17 qui est solidaire angulairement de la roue 6. Sur la figure 7 on voit le montage de ce mobile d'embrayage sur un pont de barillet 24 à l'aide d'une vis de fixation 23. Le moyeu 20 de la roue 6 est pivoté fou sur une partie centrale 25 tubulaire du pont de barillet 24 dans l'évidement de laquelle est vissée la vis de fixation 23.

Dans cette seconde forme d'exécution la première pièce d'entraînement 14 comporte quatre cliquets élastiques 15 et la seconde pièce d'entraînement 17 comporte huit dents de loup 16.

Le fonctionnement de cette seconde forme d'exécution est le même que celui de la première forme d'exécution à la seule différence que l'amplitude angulaire d'un pas est de 45° et que pour chaque pas les cliquets élastiques 15 ne sont en contact avec la seconde pièce d'entraînement 17 que sur une étendue angulaire de 11°.

Le couple maximum de rupture de cette forme d'exécution est supérieur à 1400 gr. mm et le couple minimum de résistance de 7 gr. mm ce qui donne un rapport de plus de 1/200.

Dans cette forme d'exécution le mobile d'embrayage unidirectionnel présente exactement le même encombrement qu'un mobile non débrayable correspondant puisque le système d'embrayage, soit les deux pièces d'entraînement 14, 17 sont logées dans l'évidement 21 pratiqué dans la planche de la roue 6.

Comme on peut s'en rendre compte immédiatement si l'on doit inverser le sens d'entraînement du pignon par la roue il suffit de retourner les deux pièces d'entraînement 14, 17.

Dans toutes les formes d'exécution possible de ce mobile d'embrayage unidirectionnel on bénéficie des avantages suivants :
1. Très faible encombrement en hauteur car le dispositif d'embrayage est logé dans un évidement pratiqué dans la planche du mobile.
2. Un montage très facile car il suffit de placer les première et seconde pièces d'entraînement 14, 17 dans l'évidement de la roue. Ceci s'effectuera très facilement lorsque la position angulaire de la roue et du pignon est telle que le mobile d'embrayage est dans son état de repos, neutre, pour lequel les cliquets élastiques ne sont pas en contact avec la seconde pièce d'entraînement.
3. Le couple minimum résistant lorsque le mobile tourne dans le sens du débrayage est très faible parce que les cliquets élastiques ne sont en contact avec la seconde pièce d'entraînement que pendant 1/2 ou 1/6 d'un tour complet du pignon par rapport à la roue. De plus la forme en C avec une branche externe fine et allongée des cliquets élastiques fait que lorsqu'ils doivent s'escamoter radialement pour le passage des dents une très faible force est suffisante. De plus, ce couple n'est pas constant et ne s'exerce que pendant que les cliquets élastiques sont en contact avec la seconde pièce d'entraînement.
4. Les cliquets élastiques n'étant pas continuellement en contact avec la seconde pièce d'entraînement, l'usure des cliquets élastiques et des dents de loup de la seconde pièce d'entraînement est fortement réduite.
5. Toujours grâce à la forme des cliquets élastiques le couple transmis lorsque le mobile fonctionne en embrayage est élevé car les cliquets travaillent en compression et leur base coudée les reliant à la première pièce d'entraînement est épaisse et très résistante.

Les caractéristiques importantes du mobile d'embrayage unidirectionnel selon l'invention sont :
a) La forme en C avec une branche extérieure allongée et effilée des cliquets élastiques pour leur permettre d'être déformés élastiquement radialement sous l'effet d'une faible force. La base reliant ces cliquets élastiques à la première pièce d'entraînement étant épaisse et résistante permet de transmettre un couple important.
b) Le fait que pour une révolution complète du pignon par rapport à la roue, dans le sens du débrayage, les cliquets élastiques sont en contact avec la denture en dent de loup au plus pendant 180° réduira ainsi l'usure des pièces et le couple résistant.
c) Que les première et seconde pièces d'entraînement 14, 17 sont logées dans un évidement pratiqué dans la planche de la roue ce qui réduit grandement l'encombrement en hauteur du mobile d'embrayage unidirectionnel.
d) L'extrémité des cliquets élastiques à l'état de repos, lorsqu'ils ne sont pas en contact avec la denture de la seconde pièce d'entraînement, est située sur une circonférence de diamètre plus grand que la circonférence passant par le sommet des dents 16 de la seconde pièce d'entraînement et plus petit que la circonférence passant par les fonds de ladite denture.
e) Le rapport du couple résistant, lorsque le mobile débraye, par rapport au couple maximum de rupture, lorsque le mobile embraye, est compris entre 1/200 et 1/800.
   Le couple résistant est inférieur à 20 gr. mm de préférence de 5 à 15 gr. mm.
   Le couple de rupture est supérieur à 1000 gr. mm de préférence entre 1300 gr. mm et 1800 gr. mm.
f) Le nombre de cliquets élastiques est par exemple compris entre 1 et 12, de préférence entre 3 et 8 et le nombre de dents de loup est par exemple compris entre 3 et 60.

Le mobile de débrayage décrit est plus particulièrement destiné à équiper ou être utilisé dans des applications et mécanisme faisant partie de mouvements horlogers. A titre d'exemple, la figure 10 illustre une application particulière de mobiles d'embrayage selon l'invention dans un mouvement de montre à remontage automatique.

Dans cet exemple, le rochet de barillet 30 monté sur l'axe 31 d'un barillet 32 est en prise d'une part avec un rochet intermédiaire d'automatique 33 et d'autre part avec un rochet intermédiaire de remontoir 34.

Le rochet intermédiaire de remontoir 34 est ici constitué par un mobile d'embrayage selon la seconde forme d'exécution décrite plus haut. Le moyeu 22 de la roue 6 est pivoté sur un axe 35 et cette roue 6 est en prise avec le rochet 30. Le pignon 1 de ce mobile d'embrayage est en prise avec une roue de couronne 36 entraînée par un pignon de remontoir 37 solidaire angulairement de la tige de remontoir 38 du mouvement d'horlogerie.

Ainsi lorsque l'usager tourne la couronne de remontoir de sa montre dans le sens horaire il entraîne par l'intermédiaire de la roue de couronne 36 le pignon 1 et la roue 6 du rochet intermédiaire 34 de remontoir dans le sens horaire et finalement le rochet 30 du barillet dans le sens anti-horaire.

Par contre lorsque le rochet de barillet 30 est entraîné, comme on le verra plus loin, par la roue de remontage automatique, le rochet intermédiaire du remontoir 34 débraye et n'entraîne pas la roue de couronne 36.

Le rochet intermédiaire d'automatique 33 est en prise avec le pignon d'un mobile entraîneur de rochet 39 dont la roue engrène avec le pignon d'un mobile de réduction 40 dont la roue est en prise avec le pignon d'une roue d'armage 41 coopérant avec un cliquet d'arrêt à ressort 42 et entraînée par une masse de remontage automatique (non illustrée).

Dans cette liaison cinématique de remontage automatique, la roue entraîneuse de rochet 39 est formée d'un mobile de débrayage selon la première forme d'exécution décrite plus haut. Le pignon 1 de ce mobile d'embrayage est en prise avec le rochet intermédiaire d'automatique 33 et la roue 6 de ce mobile d'embrayage est en prise avec le pignon de la roue de réduction 40.

Lorsque la roue d'armage 41 est entraînée par la masse de remontage automatique dans le sens anti-horaire la roue 1 du mobile d'embrayage formant la roue entraîneuse de rochet 39 tourne dans le sens anti-horaire entraînant également le pignon 1 de ce mobile dans le sens anti-horaire et donc le rochet de barillet 30 également dans le sens anti-horaire par l'intermédiaire du rochet intermédiaire d'automatique 33.

Par contre lorsque le rochet intermédiaire d'automatique 33 est entraîné par le rochet de barillet lors du remontage manuel, le pignon 1 du mobile d'embrayage 39 est entraîné dans le sens horaire et la roue 6 de ce mobile d'embrayage n'est pas entraînée.

Ainsi grâce à l'utilisation de deux mobiles d'embrayage 34, 39 on évite lors du remontage manuel l'entraînement de la roue de réduction 40 et de la roue d'armage 41 ménageant ainsi l'usure de sa denture et de son cliquet 42. Lors du remontage automatique du barillet 32 le mobile d'embrayage 34 débraye et la roue de couronne n'est pas entraînée.

Un tel mécanisme de remontage d'un mouvement de montre automatique comportant un mobile de débrayage entre la roue de couronne et le rochet de barillet et un second mobile de débrayage dans la liaison cinématique entre le rochet de barillet et la roue d'armage permet de réduire de façon importante l'usure du mécanisme de remontage et d'améliorer sa vitesse de remontage.

## Revendications

1. Mobile d'embrayage unidirectionnel comportant un pignon (1) et une roue (6) coaxiaux et pivotant l'un par rapport à l'autre, le mobile d'embrayage unidirectionnel comportant une première pièce d'entraînement (14) solidaire angulairement du pignon (1) comportant au moins un cliquet élastique (15) présentant la forme générale vu en plan d'un C dont une branche est allongée et se termine par une extrémité libre; et une seconde pièce d'entraînement (17) solidaire angulairement de la roue (6) et coplanaire avec la première pièce d'entraînement (14) comportant une denture interne en dent de loup (16); **caractérisé par le fait qu'**en position neutre de repos les première et seconde pièces d'entraînement (14, 17) ne se touchent pas, l'extrémité des cliquets élastiques (15) en position de repos non déformés élastiquement étant situés sur une circonférence (a) dont le diamètre est plus grand qu'une circonférence passant par le sommet des dents de loup (16) et plus petit qu'une circonférence passant pas le fond des dents (16) de la denture de la seconde pièce d'entraînement.

2. Mobile selon la revendication 1, **caractérisé par le fait que** la première (14) et la seconde (17) pièce d'entraînement sont coaxiales, coplanaires et disposées dans un évidement (12, 21) que comporte la roue (6).

3. Mobile selon la revendication 1 ou la revendication 2, **caractérisé par le fait que** la première pièce d'entraînement (14) comporte une portion centrale venue d'une pièce de fabrication avec les cliquets élastiques (15).

4. Mobile selon l'une des revendications précédentes, **caractérisé par le fait que** la seconde pièce d'entraînement (17) est une couronne comportant une denture intérieure en dent de loup (16).

5. Mobile selon l'une des revendications précédentes, **caractérisé par le fait que** lors d'une rotation du pignon (1) par rapport à la roue (6) dans le sens correspondant au débrayage du mobile, l'extrémité libre des cliquets élastiques (15) entre en contact avec la seconde pièce d'entraînement (17) et sont déformés radialement vers l'intérieur sur au plus 180° pour un tour complet du pignon (1) par rapport à la roue (6).

6. Mobile selon la revendication 5, **caractérisé par le fait que** lors d'une rotation du pignon (1) par rapport à la roue (6) dans le sens correspondant à l'embrayage du mobile, l'extrémité libre des cliquets élastiques entrent en contact avec les dents (16) de la seconde pièce d'entraînement et sont déformés élastiquement vers l'extérieur pour s'appuyer dans le fond de la denture de la seconde pièce d'entraînement permettant l'entraînement de la roue (6) par le pignon (1) ou inversement.

7. Mobile selon l'une des revendications précédentes, **caractérisé par le fait que** le pignon (1) est solidaire ou venu d'une pièce de fabrication avec un axe (2) la première pièce d'entraînement (14) étant solidaire angulairement de cet axe (2); et **par le fait que** la roue (6) est pivotée sur ledit axe (2).

8. Mobile selon l'une des revendications 1 à 6, **caractérisé par le fait que** la roue (6) comporte un moyeu central (20) servant de pivot au pignon (1) qui comporte une jupe (22) entraînant en rotation la première pièce d'entraînement (14); et **par le fait que** la planche de la roue (6) comporte un évidement (21) dans lequel sont disposés les deux pièces d'entraînement (14, 17).

9. Mobile selon la revendication 7, **caractérisé par le fait qu'**une rondelle (8) est chassée sur l'axe (2) et maintient la position axiale relative du pignon (1) par rapport à la roue (6).

10. Mécanisme de remontage d'une pièce d'horlogerie comportant au moins un mobile de débrayage unidirectionnel selon l'une des revendications précédentes.

## Patentansprüche

1. Unidirektionales Kupplungsdrehteil, das einen Trieb (1) und ein Rad (6) umfasst, die koaxial sind und sich in Bezug zueinander drehen, wobei das unidirektionale Kupplungsdrehteil ein winklig fest mit dem Trieb (1) verbundenes erstes Antriebsteil (14), das mindestens einen elastischen Sperrkegel (15) umfasst, der in der ebenen Ansicht die allgemeine Form eines C aufweist, von dem ein Schenkel länglich ist und mit einem freien Ende endet; und ein zweites Antriebsteil (17) umfasst, das winklig fest mit dem Rad (6) verbunden ist, koplanar mit dem ersten Antriebsteil (14) ist und eine wolfszahnförmige Innenverzahnung (16) umfasst; **dadurch gekennzeichnet, dass** das erste und das zweite Antriebsteil (14, 17) sich in der neutralen Ruhestellung nicht berühren, wobei die Enden der nicht verformten elastischen Sperrkegel (15) in der Ruhestellung sich an einem Umfang (a) befinden, dessen Durchmesser größer als ein Umfang, der durch die Spitze der Wolfszähne (16) verläuft, und kleiner als ein Umfang ist, der durch den Boden der Zähne (16) der Verzahnung des zweiten Antriebsteils verläuft.

2. Drehteil nach Anspruch 1, **dadurch gekennzeichnet, dass** das erste (14) und das zweite (17) Antriebsteil koaxial, koplanar und in einer Aushöhlung (12, 21) angeordnet sind, die das Rad (6) umfasst.

3. Drehteil nach Anspruch 1 oder Anspruch 2, **dadurch gekennzeichnet, dass** das erste Antriebsteil (14) einen zentralen Abschnitt umfasst, der einstückig mit den elastischen Sperrkegeln (15) hergestellt ist.

4. Drehteil nach einem der vorhergehenden Ansprüche, **dadurch gekennzeichnet, dass** das zweite Antriebsteil (17) eine Krone ist, die eine wolfszahnförmige Innenzahnung (16) umfasst.

5. Drehteil nach einem der vorhergehenden Ansprüche, **dadurch gekennzeichnet, dass** bei einer Drehung des Triebs (1) in Bezug zu dem Rad (6) in die Richtung, die der Auskupplung des Drehteils entspricht, die freien Enden der elastischen Sperrkegel (15) mit dem zweiten Antriebsteil (17) in Kontakt gelangen und für eine vollständige Umdrehung des Triebs (1) in Bezug zu dem Rad (6) über mehr als 180° radial nach innen verformt werden.

6. Drehteil nach Anspruch 5, **dadurch gekennzeichnet, dass** bei einer Drehung des Triebs (1) in Bezug zu dem Rad (6) in der Richtung, die der Einkupplung des Drehteils entspricht, die freien Enden der elastischen Sperrkegel mit den Zähnen (16) des zweiten Antriebsteils in Kontakt gelangen und elastisch nach außen verformt werden, um auf dem Boden der Zahnung des zweiten Antriebsteils aufzuliegen, wodurch der Antrieb des Rades (6) durch den Trieb (1) oder umgekehrt ermöglicht wird.

7. Drehteil nach einem der vorhergehenden Ansprüche, **dadurch gekennzeichnet, dass** der Trieb (1) fest mit einer Achse (2) verbunden ist oder einstückig mit dieser Achse (2) hergestellt ist, wobei das erste Antriebsteil (14) winklig fest mit dieser Achse (2) verbunden ist; und dadurch, dass das Rad (6) sich auf der Achse (2) dreht.

8. Drehteil nach einem der Ansprüche 1 bis 6, **dadurch gekennzeichnet, dass** das Rad (6) eine dem Trieb (1) als Drehzapfen dienende mittlere Nabe (20) umfasst, wobei der Trieb (1) einen Mantel (22) umfasst, der das erste Antriebsteil (14) drehbar antreibt; und dadurch, dass die Platte des Rades (6) eine Aushöhlung (21) umfasst, in der die zwei Antriebsteile (14, 17) angeordnet sind.

9. Drehteil nach Anspruch 7, **dadurch gekennzeichnet, dass** eine Unterlagscheibe (8) auf der Achse (2) aufgepresst ist und die relative axiale Stellung des Triebs (1) in Bezug zu dem Rad (6) aufrechterhält.

10. Mechanismus zum Aufziehen einer Uhr, der mindestens ein unidirektionales Kupplungsdrehteil nach einem der vorhergehenden Ansprüche umfasst.

## Claims

1. Unidirectional clutch mobile part comprising a pinion (1) and a wheel (6) which are coaxial and which pivot relative to one another, the unidirectional clutch mobile part comprising a first driving part (14) that is angularly rigidly connected with the pinion (1) and that comprises at least one elastic pawl (15) with the general shape, in plan view, of a C, one branch of which is elongated and terminates with a free end; and a second driving part (17) that is angularly rigidly connected with the wheel (6) and that is coplanar with the first driving part (14), comprising an internal wolf-toothing (16); **characterised by** the fact that in the neutral rest position the first and second driving parts (14, 17) do not touch one another, the end of the elastic pawls (15) in the rest position where they are not elastically deformed being located on a circumference (a) whose diameter is larger than a circumference which goes through the top of the wolf-teeth (16) and smaller than a circumference going through the bottom of the teeth (16) of the toothing of the second driving part.

2. Mobile part according to claim 1, **characterised by** the fact that the first (14) and second (17) driving parts are coaxial, coplanar and located in a recess (12, 21) that the wheel (6) comprises.

3. Mobile part according to claim 1 or claim 2, **characterised by** the fact that the first driving part (14) comprises a central portion that is of one-piece construction with the elastic pawls (15).

4. Mobile part according to one of the preceding claims, **characterised by** the fact that the second driving part (17) is a crown comprising an internal wolf-toothing (16).

5. Mobile part according to one of the preceding claims, **characterised by** the fact that during a rotation of the pinion (1) relative to the wheel (6) in the direction corresponding to uncoupling of the mobile part, the free end of the elastic pawls (15) comes into contact with the second driving part (17) and are deformed radially toward the interior over at most 180° for one complete revolution of the pinion (1) relative to the wheel (6).

6. Mobile part according to claim 5, **characterised by** the fact that during a rotation of the pinion (1) relative to the wheel (6) in the direction corresponding to coupling of the mobile part, the free end of the elastic pawls comes into contact with the teeth (16) of the second driving part and are deformed elastically toward the outside to press into the bottom of the toothing of the second driving piece, allowing the driving of the wheel (6) by the pinion (1) or vice versa.

7. Mobile part according to one of the preceding claims, **characterised by** the fact that the pinion (1) is rigidly connected or of one-piece construction with an axle (2), the first driving part (14) being angularly rigidly connected with this axle (2); and by the fact that the wheel (6) is pivoted on said axle (2).

8. Mobile part according to one of claims 1 to 6, **characterised by** the fact that the wheel (6) comprises a central hub (20) acting as a pivot to the pinion (1) which comprises a skirt (22) driving the first driving part (14) in rotation; and by the fact that the plate of the wheel (6) comprises a recess (21) in which the two driving parts (14, 17) are located.

9. Mobile part according to claim 7, **characterised by** the fact that a washer (8) is driven onto the axle (2) and maintains the relative axial position of the pinion (1) relative to the wheel (6).

10. Winding mechanism of a timepiece comprising at least one unidirectional clutch mobile part according to one of the preceding claims.
